Europäisches Patentamt

European Patent Office

Office européen des brevets

(19)

(11) Publication number: **0 076 058**
**B1**

(12) **EUROPEAN PATENT SPECIFICATION**

(45) Date of publication of patent specification: **21.08.85**

(51) Int. Cl.⁴: **B 60 R 22/34**

(21) Application number: **82304835.0**

(22) Date of filing: **14.09.82**

(54) Safety belt retractor.

(30) Priority: **22.09.81 GB 8128679**

(43) Date of publication of application:
**06.04.83 Bulletin 83/14**

(45) Publication of the grant of the patent:
**21.08.85 Bulletin 85/34**

(84) Designated Contracting States:
**DE FR GB IT**

(56) References cited:
**DE-A-2 704 084**
**DE-A-2 802 031**
**DE-A-2 837 099**

(73) Proprietor: **BRITAX (WINGARD) LIMITED**
**Chandler Road**
**Chichester Sussex, PO19 2UG (GB)**

(72) Inventor: **Cunningham, Douglas James**
**"Sambourne" 4 Church Close Dunton Basset**
**Lutterworth Leicestershire (GB)**

(74) Representative: **Hollinghurst, Antony**
**Britax Central Services 40 Granby Avenue**
**Garretts Green Birmingham, B33 0SJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to safety belt retractors and is particularly concerned with the connection of a safety belt to the spindle of a retractor.

US—A—4119281 discloses a safety belt retractor having a spindle on which a safety belt is wound, the spindle having an axially extending slot in its peripheral surface communicating with a cavity in the spindle, and a rigid bar extending through a loop formed in the end of the belt, the length of the slot being less than that of the cavity but greater than the width of the belt and the length of the bar being greater than that of the slot but less than that of the cavity.

In this known retractor, the cavity extends through the peripheral surface of the spindle opposite to the slot. The belt is attached by inserting the loop in the end thereof through the slot and the cavity so that it projects on the opposite side of the spindle to the slot. The bar is then inserted into the loop and the belt drawn back to pull the bar into the cavity. The present invention enables the bar to be placed in the loop in the belt and then inserted through the slot into whe cavity, which need not extend through the surface of the spindle on the opposite side to the slot.

According to the invention, in a safety belt retractor of the type described above, one end of the cavity has a cam formation configured so that, when one end of the bar is inserted through the slot into abutment with the end of said cam formation further from the slot, the other end of the bar can clear the other end of the slot but, when the bar is subsequently pulled in an outward direction by the safety belt, it is displaced by the cam formation into an engaged position in which both ends thereof project within the spindle beyond respective ends of the slot.

Preferably, the shape of the other end of the cavity is such as to restrict inward radial movement of said other end of the bar from said engaged position.

An embodiment of the invention will now be described by way of example with reference to the accompanying drawings in which:

Figure 1 is a longitudinal cross-sectional view of a retractor spindle in accordance with the invention, during insertion of the bar to which the webbing is connected,

Figure 2 is a cross-sectional view similar to Figure 1 showing the bar in its fully inserted position, and

Figure 3 is a cross-sectional view of the spindle only, taken on the line 3—3 in Figure 1, with the bar omitted.

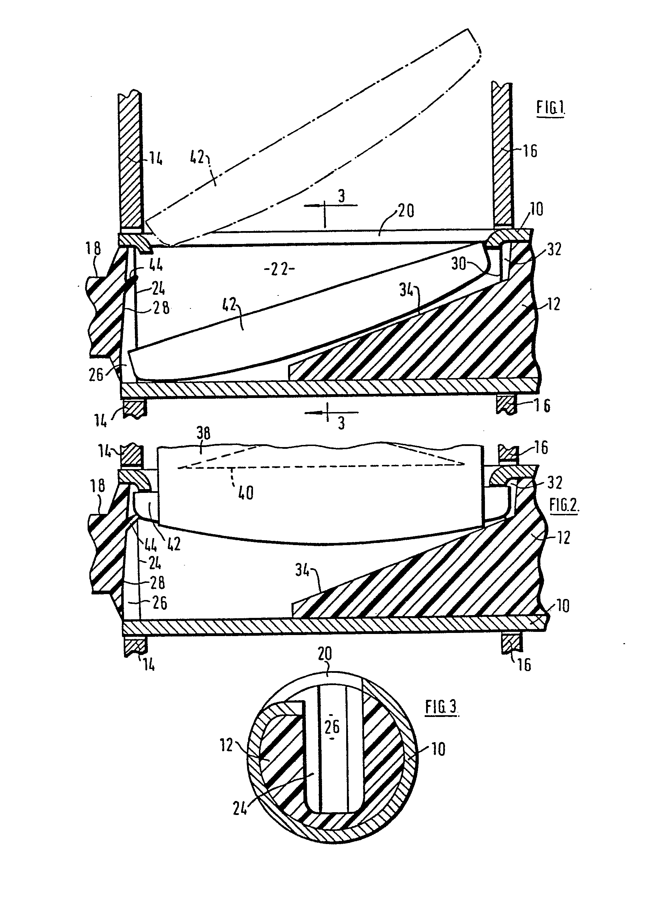

In Figure 1 the webbing forming the end of the safety belt to be connected to the retractor has been omitted for the sake of clarity. It is however shown in Figure 2.

Referring to the drawings a safety belt retractor has a spindle in the form of a tube 10, of metal or other material of similar strength, containing a core 12 which may be of a plastics material. The spindle is journaled in bearing holes in a pair of end plates 14 and 16 forming part of the frame of the retractor. At the right hand end as viewed in Figures 1 and 2, the tube 10 extends into engagement with a locking mechanism (not shown) which may be of any known design. At the left hand end as viewed in Figures 1 and 2, the core 12 has a projection 18 which extends into engagement with a rewind spring (not shown) of conventional design.

In accordance with the invention, a slot 20 is formed in the tube 10 between the end plates 14 and 16. The slot 20 communicates with a cavity 22 in the core 12 which is of the same width as the slot 20 but the ends of which, in the zone adjacent to the slot 20, extends at least partly under the end plates 14 and 16.

The left hand end wall 24 of the cavity 22, as seen in Figures 1 and 2, has a recess 26, the bottom of which comprises a cam formation 28 which slopes to the left as viewed in Figures 1 and 2 with increasing distance from the slot 20. The part of the opposite end wall 30 of the cavity nearer to the slot 20 has a recess 32. The rest of the end wall 30 comprises a wedge formation 34 which extends more than half way across the cavity 22.

The safety belt 38 which is to be connected to the retractor has its end doubled back and sewn at 40 to form a transverse loop through which a metal bar 42 is inserted. The width of the webbing 38 is less than the length of the slot 20 while the length of the bar 42 is between that of the slot 20 and the part of the cavity 22 adjacent to the slot 20. The thickness of the bar 42 is less than the width of the recesses 26 and 32 in the end walls of the cavity 22. The combined thickness of the bar 42 and the doubled bed surrounding it is less than the width of the slot 20.

When the webbing 30 is to be connected to the spindle the bar 42 is first inserted into the loop in the end of the webbing. The bar 42 is then inserted between the end plates 14 and 16 at an angle as illustrated in chain dotted lines in Figure 1. From this position it can be inserted through the slot 20 to being the left hand end thereof into the end of the recess 26 further from the slot 20. As can be seen from Figure 1, in this position the other end of the bar 42 can clear the other end of the slot 20.

If the webbing 38 is now pulled, the left hand end of the bar 42 is drawn towards the slot 20. Engagement of this end of the bar 42 with the cam formation 28 causes the bar 42 to be displaced to the right so that the other end thereof is pushed under the end of the slot 20 and into the recess 32 until the bar 42 reaches the position illustrated in Figure 2. In this position the ends of the bar 32 engage with the parts of the tube 10 which are directly aligned with the end plates 14 and 16 without imposing any significant bending force on the spindle.

The wedge formation 34 tends to assist in the retention of the bar 32 in its fully inserted position and also renders it impossible for the left hand end of the bar 42 to be inserted into the slot 20 of the left hand end. However, it will be appreciated that the right hand end of the cavity could be modified in such a way as to permit either end of the bar 42 to be inserted before the other if this mode of assembly is desired.

A resilient projection 44 may be provided on the cam formation 28 to retain the left hand end of the bar 42 in its position of use. The projection 44 is shaped to allow the end of the bar to snap over it during movement from the position shown in Figure 1, to that shown in Figure 2.

**Claims**

1. A safety belt retractor having a spindle (10) on which a safety belt (38) is wound, the spindle (10) having an axially extending slot (20) in its peripheral surface, communicating with a cavity (22) in the spindle (10), and a rigid bar (42) extending through a loop formed in the end of the belt (38), the length of the slot (20) being less than that of the cavity (22) but greater than the width of the belt (38) and the length of the bar (42) being greater than that of the slot (20) but less than that of the cavity (22), characterised in that one end of the cavity (22) has a cam formation (28) configured so that, when one end of the bar (42) is inserted through the slot (20) into abutment with the end of said cam formation (28) further from the slot (20), the other end of the bar (42) can clear the other end of the slot (20), but, when the bar (42) is subsequently pulled in an outward direction by the safety belt (38), it is displaced by the cam formation (28) into an engaged position in which both ends thereof project within the spindle (16) beyond respective ends of the slot (20).

2. A retractor according to claim 1, characterised in that said other end of the cavity comprises a formation (34) shaped to restrict inward radial movement of said other end of the bar (42).

3. A retractor according to claim 1 or 2, characterised by a resilient projection (44) on the cam formation (28) adapted to inhibit radial inward displacement of the adjacent end of the bar from its engaged position.

4. A retractor according to claim 1, 2 or 3, characterised in that the spindle comprises a tube (10) having the slot (20) formed therein, and a core (12) containing the cavity (22).

5. A retractor according to claim 4, characterised in that the tube (10) is formed of metal and the core (12) is formed of a plastics material.

**Revendications**

1. Enrouleur de ceinture de sécurité comportant une broche (10) sur laquelle est enroulée une ceinture de sécurité (38), la broche (10) présentant dans sa surface périphérique une fente s'étendant axialement (20), communiquant avec une cavité (22) de la broche (10), et une barrette rigide (42) s'étendant à travers une boucle ménagée dans l'extrémité de la ceinture (38), la longueur de la fente (20) étant inférieure à celle de la cavité (22) mais supérieure à la largeur de la ceinture (38) et la longueur de la barrette (42) étant supérieure à celle de la fente (20) mais inférieure à celle de la cavité (22), caractérisé en ce qu'une extrémité de la cavité (22) présente une formation de came (28) configurée de sorte que, quand l'une des extrémités de la barrette (42) est insérée à travers la fente (20) jusqu'à buter contre l'extrémité de ladite formation de came (28) la plus distante de la fente (20), l'autre extrémité de la barrette (42) peut franchir l'autre extrémité de la fente (20), mais que, quand la barrette (42) est ultérieurement tirée vers l'extérieur par le ceinture de sécurité (38), elle est amenée par la formation de came (28) dans une position d'engagement dans laquelle ses deux extrémités s'étendent dans la broche (16) au-delà des extrémités respectives de la fente (20).

2. Enrouleur selon la revendication 1, caractérisé en ce que ladite autre extrémité de la cavité présente une formation (34) de forme voulue pour limiter le déplacement radial vers l'intérieur de ladite autre extrémité de la barrette (42).

3. Enrouleur selon l'une des revendications 1 ou 2, caractérisé par une saillie élastique (44) prévue sur la formation de came (28) pour s'opposer au déplacement radial vers l'intérieur de l'extrémité voisine de la barrette à partir de sa position d'engagement.

4. Enrouleur selon l'une quelconque des revendications 1 à 3, caractérisé en ce que la broche est constituée par un tube (10) dans lequel est ménagée la fente (20) et par une âme (12) contenant la cavité (22).

5. Enrouleur selon la revendication 4, caractérisé en ce que le tube (10) est un métal et en ce que l'âme (12) est en matière plastique.

**Patentansprüche**

1. Sicherheitsgurt-Rückhalter, mit einer Spindel (10), auf der ein Sicherheitsgurt (38) aufgewickelt ist, wobei die Spindel (10) in ihrer Umfangsfläche einen axialen Schlitz (20) aufweist, der mit einem in der Spindel (10) befindlichen Hohlraum (22) in Verbindung steht, und mit einer starren Stange (42), die eine am Ende des Gurts (38) gebildete Schlaufe durchsetzt, wobei die Länge des Schlitzes (20) kleiner ist als die des Hohlraums (22) jedoch größer als die Breite des Gurts (38), und die Länge der Stange (42) größer als die des Schlitzes (20), jedoch kleiner als die des Hohlraums (22) ist, dadurch gekennzeichnet, daß ein Ende des Hohlraums (22) eine Steuerfläche (28) aufweist, die derart gestaltet ist, daß, wenn ein Ende der Stange (42) durch den Schlitz (20) in Anlage mit dem von dem Schlitz (20) entfernten Ende der Steuerfläche (28) eingeführt ist, das andere Ende der Stange (42) von dem anderen Ende des Schlitzes (20) frei ist, daß jedoch, wenn anschließend die Stange (42) durch den Sicherheitsgurt (38) nach außen gezogen wird, sie durch die Steuerkurve (28) in eine Eingriffsstellung versetzt wird, in welcher ihre beiden Enden innerhalb der Spindel (16) unter die jeweiligen Enden des Schlitzes (20) vorstehen.

2. Rückhalter nach Anspruch 1, dadurch gekennzeichnet, daß das andere Ende des Hohlraums eine Formgebung (34) aufweist, durch die die nach innen gerichtete, radiale Bewegung des anderen Endes der Stange (42) beschränkt wird.

3. Rückhalter nach Anspruch 1 oder 2, gekennzeichnet durch einen an der Steuerfläche (28) befindlichen elastischen Vorsprung (44), der eine radial nach innen gerichtete Versetzung des benachbarten Endes der Stange aus deren Eingriffstellung verhindert.

4. Rückhalter nach Anspruch 1, 2 oder 3, dadurch gekennzeichnet, daß die Spindle ein Rohr (10) mit dem darin ausgebildeten Schlitz (20) und einen den Hohlraum (22) enthaltenden Kern (12) aufweist.

5. Rückhalter nach Anspruch 4, dadurch gekennzeichnet, daß das Rohr (10) aus Metall und der Kern (12) aus einem Kunststoff besteht.

FIG.1

FIG.2.

FIG.3